Europäisches Patentamt

European Patent Office

Office européen des brevets

(19)

(11) Numéro de publication : **0 548 242 B1**

(12) **FASCICULE DE BREVET EUROPEEN**

(45) Date de publication du fascicule du brevet :
**03.08.94 Bulletin 94/31**

(51) Int. Cl.$^5$ : **C02F 1/46**

(21) Numéro de dépôt : **91917248.6**

(22) Date de dépôt : **13.09.91**

(86) Numéro de dépôt international :
**PCT/FR91/00725**

(87) Numéro de publication internationale :
**WO 92/05116 02.04.92 Gazette 92/08**

(54) **PROCEDE ET APPAREIL DE TRAITEMENT DE L'EAU PAR ELECTROLYSE, NOTAMMENT EN VUE DE SA DECARBONATATION.**

(30) Priorité : **14.09.90 FR 9011413**

(43) Date de publication de la demande :
**30.06.93 Bulletin 93/26**

(45) Mention de la délivrance du brevet :
**03.08.94 Bulletin 94/31**

(84) Etats contractants désignés :
**AT BE CH DE DK ES FR GB GR IT LI LU NL SE**

(56) Documents cités :
**EP-A- 0 338 896**

(73) Titulaire : **MERCIER, Dominique**
**Chemin de Dury**
**F-62860 Recourt (FR)**

(72) Inventeur : **MERCIER, Dominique**
**Chemin de Dury**
**F-62860 Recourt (FR)**

(74) Mandataire : **Bruder, Michel et al**
**Cabinet Michel Bruder**
**Conseil en Brevets**
**10, rue de la Pépinière**
**F-75008 Paris (FR)**

EP 0 548 242 B1

## Description

La présente invention concerne un procédé de traitement de l'eau par électrolyse, notamment en vue de sa décarbonatation, ainsi qu'un appareil pour la mise en oeuvre de ce procédé.

Parmi les divers traitements de l'eau visant à sa décarbonatation on connaît déjà différents procédés et appareils électriques qui sont basés sur l'électrolyse de l'eau. Dans de tels appareils d'électrolyse connus on fait circuler un courant électrique par conduction ionique, au sein de l'eau, entre deux électrodes, à savoir une anode reliée au pôle positif d'un dispositif d'alimentation électrique et une cathode reliée au pôle négatif de ce dispositif. L'électrolyse de l'eau se traduit par la germination, à la cathode, du carbonate de calcium formé à partir du bicarbonate de calcium présent dans l'eau, puis sa cristallisation et par conséquent sa neutralisation.

Dans les appareils d'électrolyse de l'eau connus à ce jour qui sont utilisés pour la décarbonatation de l'eau, les potentiels des électrodes, qui résultent du passage du courant électrique, par conduction ionique, à travers l'eau, ne sont pas correctement exploités et ne sont pas ajustés et contrôlés par rapport au solvant qu'est l'eau. Notamment ces appareils ne tiennent pas compte de la nature des électrodes et ne prennent pas en compte les potentiels redox de l'eau lesquels déterminent sa stabilité. Il en résulte des phénomènes inhibiteurs de la germination du carbonate de calcium, des phénomènes de corrosion et/ou un entartrage à l'endroit des électrodes des appareils, ainsi qu'en aval de ces appareils. De plus, du fait que le fonctionnement de ces appareils n'est pas régulé par rapport à l'eau, il est impossible d'obtenir les rendements que prédit la théorie.

La présente invention vise à remédier à ces inconvénients en procurant un procédé et un appareil permettant, dans des conditions particulièrement économiques, fiables et permanentes, d'obtenir la neutralisation de la dureté de l'eau.

A cet effet ce procédé de traitement de l'eau par électrolyse, notamment en vue de sa décarbonatation, dans lequel on fait passer un courant électrique dans l'eau, par conduction ionique, entre une anode et une cathode reliées respectivement aux pôles positif et négatif d'un dispositif de commande électrique, est caractérisé en ce qu'on choisit, pour la cathode, un métal dont le potentiel redox, constituant un potentiel de référence restant sensiblement constant par rapport à l'eau, pendant l'électrolyse, est supérieur au seuil de réduction effectif de l'eau, de manière à éviter la réduction de cette eau, et on produit, pendant l'électrolyse, les ions $OH^-$ nécessaires pour la germination du carbonate de calcium uniquement à partir de l'oxygène dissous dans l'eau.

L'invention a également pour objet un appareil de traitement de l'eau par électrolyse, en vue de sa décarbonatation, comportant une cellule électrolytique et un dispositif de commande électrique, la cellule électrolytique comprenant une cuve à laquelle sont reliées une canalisation d'arrivée de l'eau traitée et une canalisation de départ de l'eau traitée et dans laquelle est engagée au moins une anode, caractérisé en ce que la cuve constitue la cathode de la cellule électrolytique, la cathode est prise comme électrode de référence et est réalisée en un métal dont le potentiel redox est supérieur au seuil de réduction effectif de l'eau.

On décrira ci-après, à titre d'exemples non limitatifs, diverses formes d'exécution de la présente invention, en référence au dessin annexé sur lequel :

La figure 1 est une vue en coupe verticale schématique d'une cuve électrolytique utilisable pour la mise en oeuvre du procédé de décarbonatation de l'eau suivant l'invention.

La figure 2 est un schéma électrique du dispositif de commande électrique de la cuve électrolytique suivant l'invention.

La figure 3 est une vue en coupe longitudinale et verticale d'une variante de mise en oeuvre de l'invention.

La figure 4 est une vue en coupe suivant la ligne IV-IV de la figure 3 de la variante de mise en oeuvre représentée sur celle-ci.

La figure 5 est une vue schématique d'une autre variante de mise en oeuvre de l'invention.

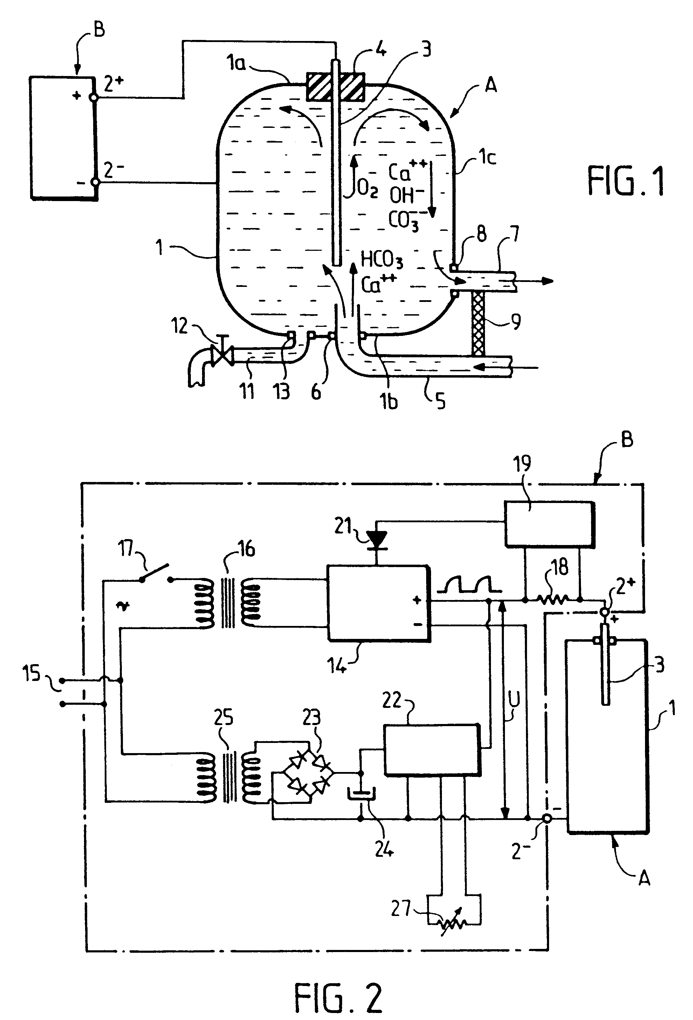

L'appareil d'électrolyse représenté sur la figure 1 comprend essentiellement une cellule électrolytique A et un dispositif de commande électrique B. La cellule électrolytique A comporte une cuve métallique 1 formant la cathode de la cellule A et qui est reliée au pôle négatif 2- du dispositif de commande électrique B. La cuve 1 contient au moins une anode 3 qui est reliée au pôle positif 2+ du dispositif de commande électrique B. Cette anode 3 s'étend de préférence verticalement au centre de la cuve 1 et elle traverse la paroi supérieure 1a de la cuve 1 en étant séparée par un manchon 4 isolant électriquement. La cuve 1 est parcourue, pendant l'électrolyse, par un flux d'eau qui est amené dans la cuve 1 par une canalisation d'arrivée 5 débouchant dans le fond 1b de la cuve 1 et dont elle est isolée électriquement par un manchon isolant 6. A la surface latérale de la cuve 1 se raccorde une canalisation 7 de départ de l'eau traitée, cette canalisation 7 étant isolée électriquement de la paroi latérale 1c de la cuve 1 par un manchon isolant 8. La continuité électrique des canalisations 5 et 7 est réalisée par un conducteur extérieur 9, tel qu'une tresse de cuivre, qui relie les deux canalisations d'arrivée 5 et de départ 7 sans aucun contact avec la cuve 1. Enfin une canalisation de vidange 11 sur laquelle est branché un robinet de vidange 12, débouche dans le fond 1b de la cuve 1 et est également isolée électriquement de ce fond par un manchon isolant 13.

Suivant l'invention la cuve 1 est supportée par tous moyens isolants appropriés de manière à être isolée de la terre. Elle est réalisée en un métal, tel que par exemple le fer, dont le potentiel redox, constituant un potentiel de référence, est judicieusement choisi pour ne permettre que certaines réactions à son contact. Ce potentiel redox de la cathode 1, constituant le potentiel de référence de l'appareil, n'est pas influencé par le passage du courant pendant l'électrolyse et il conserve sensiblement sa valeur initiale par rapport à l'eau : c'est pour garantir sa stabilité que la cuve 1 constituant la cathode est isolée de la terre. Cependant pour certaines applications spécifiques, ou lorsque des conditions de sécurité particulières sont imposées on peut ne pas réaliser une telle isolation.

L'expérience et la théorie de l'électrochimie en solution aqueuse permettent de déterminer comment il convient de choisir le potentiel redox, c'est-à-dire le métal constituant la cathode 1, pour empêcher la réduction incontrôlée de l'eau à la cathode. En effet une telle réduction incontrôlée provoquerait, d'une part, un dégagement d'hydrogène et, d'autre part, la constitution rapide de carbonate de calcium sur la cathode 1, ce qui perturberait l'efficacité de l'appareil. Le dégagement d'hydrogène à la cathode, qui est provoqué par la réduction effective de l'eau, permet la production d'ions $OH^-$, mais cette production est prépondérante à la surface de la cathode, ce qui explique la formation de dépôts de carbonate de calcium sur cette surface.

Pour limiter au maximum les dégagements gazeux, et notamment le dégagement d'hydrogène à la cathode, dégagement susceptible de provoquer des corrosions, et pour réduire au maximum les risques d'entartrage de la cathode 1, on choisit, pour la cathode 1, un métal dont le potentiel redox, constituant le potentiel de référence, a une valeur supérieure au potentiel de réduction effective de l'eau et de préférence inférieure au potentiel standard de réduction de l'eau.

L'expérience a montré que, dans le cas d'une eau ayant une valeur du pH déterminée, le potentiel $p_c$ du métal de la cathode 1 doit satisfaire à la relation ci-dessous :

$$-0,826 \text{ volt} - 0,059 \text{ pH} < p_c < 0,000 \text{ volt} - 0,059 \text{ pH}$$

La valeur (- 0,000 volt - 0,059 pH) correspond au seuil de réduction de l'eau tandis que la valeur (- 0,826 volt - 0,059 pH) correspond au couple redox :

$$2 \text{ H}_2 \text{ gaz}/\text{H}_2\text{0} = - 0,826 \text{ volt à pH} = 0 \text{ que l'on}$$
appelle seuil de réduction effectif

$$2 \text{ H}_2\text{0} + 2e^- \rightleftarrows \text{H}_2 + 2\text{OH}^-$$

Le fer et un certain nombre de ses alliages correspondent à ce choix. L'expérience montre que l'on doit modifier cet écart pour le porter aux valeurs suivantes :

$$- 0,826 \text{ volt} - 0,059 \text{ pH} < p_c < - 0,059 \text{ volt} - 0,059 \text{ pH}$$

L'acier inoxydable correspond à ce choix de valeurs.

Lorsqu'il y a une réduction effective de l'eau, la production d'ions $OH^-$ s'effectue suivant la réaction :

$$2 \text{ H}_2\text{0} + 2e^- \rightleftarrows 2\text{0H}^- + \text{H}^2$$

Ces ions $OH^-$ sont nécessaires à la germination du carbonate de calcium car ils permettent la transformation des bicarbonates en carbonates qui, associés aux ions calcium, donneront des germes, puis des cristaux de carbonate de calcium.

Les réactions sont les suivantes :

$$\text{HCO}_3^- + \text{OH}^- \rightleftarrows \text{CO}_3^{--} + \text{H}_2\text{0}$$
$$\text{CO}_3^{--} + \text{Ca}^{++} \rightleftarrows \text{Ca CO}_3$$

Comme il a été expliqué plus haut, cette production d'ions $OH^-$, par réduction effective de l'eau, favorise le dépôt de carbonate de calcium sur la cathode, ce qui limite, dans le temps, l'efficacité.

Une des caractéristiques du procédé et de l'appareil suivant l'invention est que l'on produit les ions $OH^-$, non pas à partir de la réduction effective de l'eau, mais à partir de l'oxygène dissous dans l'eau, que cet oxygène s'y trouve naturellement ou qu'il soit apporté artificiellement.

La réaction s'écrit :

$$1/2 \text{ 0}_2 + \text{H}_2\text{0} + 2e^- \rightleftarrows 2\text{0H}^-$$

Les ions $OH^-$ ainsi créés le sont de préférence dans la solution à proximité de la cathode (zone cathodique), ce qui favorise une germination du carbonate de calcium en solution plutôt qu'en dépôt sur la cathode. De plus cette réaction ne produit pas de dégagement d'hydrogène, ce qui limite les risques de corrosion.

La solution aqueuse ne contient que très rarement la quantité d'oxygène dissous nécessaire à une quantité suffisante de carbonate de calcium. Dans ce cas on apporte, suivant l'invention, une quantité suffisante d'oxygène dissous dans l'eau par des moyens auxiliaires. Cet apport peut être réalisé, notamment, par aération préalable de l'eau, c'est-à-dire avant son arrivée dans la cuve 1, par introduction d'oxygène dans l'eau se trouvant dans la cuve 1 ou bien, ce qui constitue la solution la plus intéressante, par oxydation de l'eau à l'anode avec dégagement d'oxygène.

Dans tous les cas l'apport d'oxygène ne doit pas être supérieur à la possibilité de transformation en ions $OH^-$ en zone cathodique.

Dans la solution préférée, pour obtenir l'apport de la quantité nécessaire d'oxygène dissous, on porte l'anode 3, par une régulation positive incorporée dans le dispositif de commande électrique B, à un potentiel positif par rapport au potentiel de référence, c'est-à-dire celui de la cathode 1. Pour des raisons qui seront exposées en détail plus loin, l'anode 3 est en fait soumise à une tension continue moyenne à laquelle sont superposées des impulsions de forme spécifique.

On a remarqué que l'oxygène dissous de l'eau à traiter est toujours réduit, à la cathode, avant la réduction de l'eau, ce qui explique la limite inférieure du potentiel redox (de la cathode 1) possible (-0,826 volt - 0,059 pH) comme il a été indiqué précédemment. L'oxygène dissous a besoin, pour être réduit, des électrons qui sont fournis par la cathode 1. La production d'ions OH⁻ peut être calculée par la loi de Faraday.

$$OH^- = \frac{I}{96484,6 \times Q}$$

dans laquelle I est l'intensité du courant et Q est le débit de l'eau.

Il est à noter que l'on peut, sous certaines conditions, étendre la plage de potentiel redox possible à la zone de blocage cinétique de l'eau à la réduction, mais cette extension n'est possible que sur quelques dixièmes de volt. Par ailleurs le courant pouvant passer dans la cellule électrolytique A peut être déterminé comme suit : U = e + R I, équation dans laquelle U est la différence de potentiel entre l'anode et la cathode , e la force contre-électromotrice de la cellule, R la résistance de la cellule, et I l'intensité du courant. Les expériences qui ont été effectuées, ont montré qu'il faut maintenir le potentiel moyen de l'anode 3 (et le potentiel de cette anode en l'absence de débit d'eau) à une valeur inférieure au potentiel redox d'oxydation de l'eau, afin d'éviter la formation incontrôlée d'oxygène gazeux et de protons hydrogène. Le potentiel de l'anode 3, qui doit être réalisée de préférence en métal incorrodable, tel que le titane ou le graphite, doit être tel que l'on respecte la relation :

U < (| pc |  + (1,229 volt -  0,059 pH)

dans laquelle U est la différence de potentiel moyenne entre l'anode et la cathode et | p$_c$ | est la valeur absolue du potentiel redox du métal de la cathode.

La valeur (1,229 volt - 0,059 pH) peut être, dans certains cas, repoussée à la valeur du blocage cinétique de l'eau à l'oxydation. La différence de potentiel moyenne entre l'anode et la cathode est alors déterminée par la relation ci-dessous :

U < (| pc |  + (1,63 volt -  0,059 pH)

Cette différence de potentiel doit être naturellement la plus grande possible sans dépasser ces valeurs.

Cependant les expériences effectuées ont montré, qu'avec des différences de potentiel entre l'anode et la cathode telles que déterminées par les relations susmentionnées, on ne peut généralement pas produire un courant, par conduction ionique, ayant une intensité suffisante. Pour remédier à cela il est prévu, suivant une caractéristique complémentaire de l'invention, d'appliquer en plus à l'anode des impulsions positives périodiques de forme spécifique, produites par un générateur d'impulsion. Ceci permet d'obtenir plusieurs résultats à savoir :

- on peut maintenir une différence de potentiel moyenne entre l'anode 3 et la cathode 1 dans les limites susmentionnées, cette différence de potentiel moyenne étant fonction notamment de l'amplitude des impulsions;
- on peut dépasser le seuil d'oxydation de l'eau pendant la période de temps durant laquelle chacune de ces impulsions est présente et on peut donc produire de l'oxygène dissous qui, par une conformation appropriée du circuit hydraulique, est alors dirigé vers la cathode pour produire des ions OH⁻, sans modifier le potentiel de la cathode;
- on produit une intensité du courant électrique suffisante pour fournir les électrons nécessaires à la transformation de l'oxygène gazeux en ions OH⁻.

On décrira maintenant, en se référant plus particulièrement à la figure 2, une forme d'exécution du dispositif de commande électrique B permettant de produire les impulsions i précitées. Ce dispositif comprend, comme il a déjà été indiqué, deux bornes de sortie, à savoir une borne de sortie positive 2+ reliée à l'anode 3 et une borne de sortie négative 2- reliée à la cathode, c'est-à-dire à la cuve 1. Le dispositif de commande électrique B comprend un générateur d'impulsions 14, dont l'entrée est reliée au secteur d'alimentation électrique 15, par l'intermédiaire d'un transformateur 16 et d'un contacteur de débit d'eau 17. La sortie positive du générateur d'impulsions 14 est reliée à la borne de sortie positive 2+, c'est-à-dire à l'anode 3, par l'intermédiaire d'une résistance de mesure 18, en série, aux deux bornes de laquelle est connecté un appareil 19 de mesure et d'intégration de l'intensité du courant électrique. Cet appareil 19 est connecté, par l'intermédiaire d'une diode 21, à une entrée de commande du générateur d'impulsions 14.

Le dispositif de commande électrique 2 comprend également un circuit 22 de mesure et de régulation de la tension de sortie moyenne U entre les deux bornes 2+ et 2-, c'est-à-dire de la différence de potentiel moyenne entre l'anode 3 et la cathode 1. Les deux sorties de ce circuit 22 sont respectivement connectées à la sortie positive du générateur d'impulsions 14 et à la borne de sortie négative 2-, c'est-à-dire à la cathode 1. Son entrée est reliée, par l'intermédiaire d'un pont redresseur à diodes 23, d'un condensateur de filtrage 24, et d'un transformateur 25, au secteur d'alimentation électrique 15. Le circuit 22 est enfin connecté à un potentiomètre de réglage 27 de la différence de potentiel U moyenne.

Le circuit qui vient d'être décrit en référence à la figure 2 permet de réguler l'ensemble des paramètres intervenant dans le procédé suivant l'invention, à savoir la tension moyenne, la tension maximale, la fréquence des impulsions i et l'intensité, en les asservissant à des valeurs de consigne que sont notamment l'intensité à fournir et la différence de potentiel moyenne U entre l'anode 3 et la cathode 1.

Le circuit représenté sur la figure 2 permet de garantir une différence de potentiel U entre la cathode 1 et l'anode 3 telle, qu'en l'absence des impulsions i, le potentiel de l'anode 3 soit inférieur au potentiel d'oxydation de l'eau. Ce circuit permet en effet de fixer l'anode 3, en l'absence d'une impulsion i émise par le générateur 14, à un potentiel qui est supérieur à celui de la cathode 1 d'une valeur U, qui est telle que déterminée par le circuit de mesure et de régulation 22 fixant une valeur de consigne réglée par le potentiomètre 27. Cette valeur de consigne de U est choisie de manière à correspondre à une différence de potentiel entre l'anode 3 et la cathode 1 qui place le potentiel de l'anode 3 sous le seuil d'oxydation de l'eau. Cette différence de potentiel U, qui peut être ainsi obtenue par interruption de la tension délivrée par le générateur 14, par exemple par la coupure de l'alimentation du transformateur 16 lors de l'ouverture du contacteur 17, n'agit pas sur le potentiel de référence de la cathode 1.

En l'absence de débit d'eau, le contacteur 17 étant ouvert, le générateur d'impulsions 14 n'est donc pas alimenté, les impulsions i sont absentes, et l'anode 3 est maintenue à la tension de consigne U. Lorsqu'il y a un débit d'eau, le contacteur 17 est alors fermé et le générateur d'impulsions 14 est alimenté. Dans chaque intervalle entre les impulsions i, l'oxygène dissous dans l'eau est réduit, à la cathode 1, en ions $OH^-$, alors que l'eau n'est pas réduite, tandis qu'à l'anode 3 l'oxydation de l'eau est bloquée du fait que l'anode 3 est alors portée à un potentiel inférieur au seuil d'oxydation de l'eau. Lorsqu'une impulsion i est présente, l'oxygène dissous est toujours réduit, à la cathode, en ions $OH^-$ mais pas l'eau. Par contre, du fait que le potentiel de l'anode 3 est alors temporairement supérieur au seuil d'oxydation de l'eau, cette eau est oxydée à l'anode 3 pour apporter le complément en oxygène dissous nécessaire à la production des ions $OH^-$ à la cathode.

En l'absence de débit d'eau il y a une réduction de l'oxygène dissous contenu dans l'eau de la cellule électrolytique A, mais il n'y a ni réduction ni oxydation de l'eau .

Il est à noter que l'oxydation de l'eau, lors de la présence des impulsions i, produit des ions $H^+$. Ces ions $H^+$ pourraient réagir avec des ions $CO_3^{--}$ formés à la cathode ou avec les ions $HCO_3^-$, conformément aux réactions suivantes :

$$H^+ + CO_3^{--} \rightleftharpoons HCO_3^-$$
$$HCO_3^- + H^+ \rightleftharpoons CO_2, H_2O$$

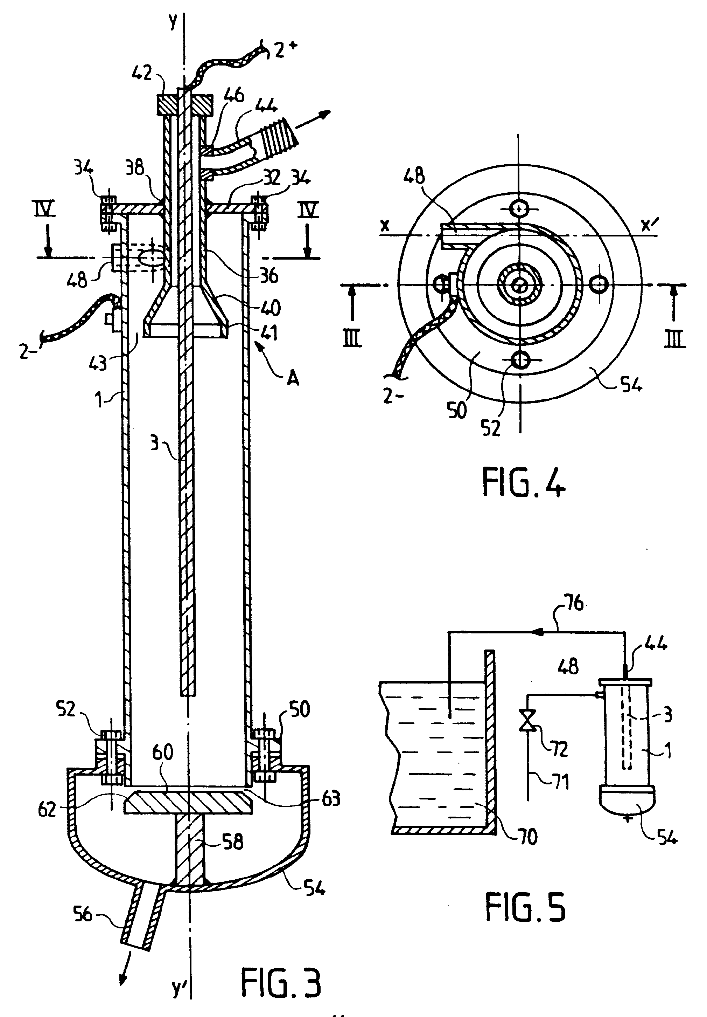

Il est donc souhaitable que ces ions $H^+$ produits à l'anode ne rencontrent pas les ions carbonate $CO_3^{--}$ produits à la cathode avant leur évolution en $CaCO3$. A cet effet la cellule électrolytique A doit être telle que les électrodes soient séparées par un volume d'eau suffisant et/ou que ces ions $H^+$ rencontrent soit d'abord l'eau brute riche en ions $HCO_3^-$ et pauvre en ions $CO_3^{--}$, soit l'eau déjà traitée. Ce problème a été résolu, lors des expériences, par une disposition particulière de la cuve 1 et de son alimentation hydraulique, ainsi que, comme représenté sur la figure 3, en créant dans la cuve de traitement un phénomène de tourbillon ou "vortex" comme expliqué ci-après.

Les impulsions i émises par le générateur 14 ont été choisies avec une forme spécifique appropriée au traitement considéré. En effet il est nécessaire que l'on ait un rapport dV (volt) /dt (temps) très faible à la montée de chaque impulsion, tout en limitant les phénomènes indésirables à l'électrode et tout en ayant une durée d'impulsion très courte, pour conserver une différence de potentiel moyenne U conforme aux valeurs citées plus haut. Ce type d'impulsion a donc de préférence un flanc de montée de forme hyperbolique et un flanc de descente sensiblement vertical, comme il est représenté sur la figure 2. Cette forme d'impulsion permet un passage optimal de courant électrique pendant la montée de l'impulsion i et une réaction nette à l'anode 3 lors de la chute de l'impulsion. On pourrait aussi utiliser, mais avec de moins bons résultats, d'autres formes d'impulsion, par exemple en forme de trapèze ou de dent de scie écrêtée, c'est-à-dire ayant un flanc de montée à faible pente suivi d'un palier horizontal et d'un flanc de descente vertical ou à forte pente.

Le rapport entre l'amplitude, la fréquence, et la tension de repos U imposés à l'anode en l'absence d'impulsions, déterminent la tension moyenne de l'anode et la quantité de courant passant dans la cellule de traitement lors du passage des impulsions. Cette valeur moyenne peut ainsi être ajustée au moyen de l'appareil de mesure et d'intégration de l'intensité du courant 19.

Suivant l'invention on peut contrôler et ajuster automatiquement, à partir de valeurs de consigne, l'ensemble des phénomènes électriques, les valeurs de consigne étant de préférence l'intensité souhaitée lorsqu'il y a débit d'eau, la durée de chaque impulsion i que l'on règle la plus courte possible, et la valeur de la tension U.

Dans le circuit électrique tel que représenté sur la figure 2, la fréquence des impulsions i détermine l'intensité du courant passant dans la cellule, et l'amplitude de ces impulsions i détermine la tension moyenne à l'anode 3 par rapport à la tension de référence de la cathode 1. Par sécurité la tension de l'anode 3 est ramenée à une valeur de consigne prédéterminée lorsqu'il n'y a pas d'impulsions. Cette valeur correspond normalement à la valeur de consigne U.

Comme il été indiqué précédemment, le générateur d'impulsions 14 ne fonctionne que s'il y a un débit d'eau, grâce à la présence du contacteur de débit 17. Il n'y a donc pas de consommation excessive de courant électrique ni de risques de corrosion liés à une éventuelle réduction de l'eau ou à l'oxydation de l'eau (dégagement d'hydrogène et d'oxygène).

La tension moyenne est maintenue par l'automatisme associé au générateur. La fréquence des impulsions du générateur 14 est déterminée par le circuit 19 (intégrateur électronique) en fonction de l'ampérage souhaité qui est donné initialement en tant que valeur de consigne à l'intégrateur 19. La différence de potentiel entre l'anode 3 et la cathode 1, au moment des impulsions i, est fonction de l'ampérage souhaité et de la durée de l'impulsion. La durée de chaque impulsion est réglable manuellement sur des temps allant de la microseconde à quelques millisecondes.

Le procédé de traitement de l'eau suivant l'invention peut également être mis en oeuvre, de façon particulièrement intéressante, à l'aide d'un dispositif séparateur de particules à circulation de fluide, et plus particulièrement dans une enceinte dans laquelle l'eau que l'on souhaite traiter est mise en mouvement de façon à constituer un tourbillon, ou "vortex".

Un tel dispositif, représenté sur les figures 3 et 4 constitue donc à la fois une cellule électrolytique A suivant l'invention et une enceinte à tourbillon.

Ce dispositif comprend ainsi une cuve métallique cylindrique 1 d'axe longitudinal yy' vertical, qui forme la cathode de la cellule électrolytique A et qui est donc réunie, comme vu, précédemment, au pôle négatif 2- du dispositif de commande électrique B. La cuve cylindrique 1 est fermée, à sa partie supérieure, par un couvercle 30 qui est fixé sur une bride circulaire 32 de la cuve 1 par des boulons 34, avec interposition de moyens d'étanchéité. Le couvercle 30 est traversé par un tube cylindrique 36 qui est soudé sur celui-ci et qui s'étend à l'intérieur de la cuve 1 pour se terminer par une partie tronconique 40 évasée vers le bas, suivie d'une partie cylindrique 41 de plus faible diamètre que le diamètre interne de la cuve 1, de façon à former entre elles un passage annulaire 43 apte à permettre le passage d'un tourbillon. Le tube 36 est traversé par une anode axiale 3, qui est reliée au pôle 2+ du dispositif de commande (B) et qui est fixée à la partie supérieure du tube 36 par un manchon 42. La partie supérieure du tube 36, externe à la cuve 1, est de plus, raccordée à une conduite de sortie d'eau 44, par l'intermédiaire d'un manchon isolant 46. La partie supérieure de la cuve 1 reçoit une conduite d'injection 48 qui est fixée sur celle-ci, par exemple par soudage, et dont le passage interne débouche dans la cuve 1. L'axe xx' de cette conduite d'injection 48 est disposée transversalement par rapport à l'axe longitudinal yy' de la cuve 1 et tangentiellement par rapport à la surface interne de celle-ci. La partie externe de cette conduite possède des moyens de connexion permettant de la relier à une source d'alimentation en eau à traiter. La partie inférieure de la cuve 1 comporte une bride annulaire 50 sur laquelle est fixée, au moyen de boulons 52, une chambre collectrice 54 dont le fond est muni d'un conduit d'évacuation 56. Un support cylindrique axial 58 est fixé sur la face interne de la chambre collectrice 54 et assure le maintien, à sa partie supérieure, d'un plateau déflecteur circulaire 60 perpendiculaire à l'axe yy' de la cuve 1, dont la périphérie de la face supérieure est pourvue d'un chanfrein 62. Le diamètre du plateau déflecteur 60 est tel qu'un passage annulaire 63 est constitué entre la partie inférieure de la cuve 1 et le plateau déflecteur 60, ce passage annulaire 63 possédant une section de passage déterminée, ainsi qu'il sera exposé plus loin.

Le présent mode de mise en oeuvre de l'invention permet de créer, dans la cuve 1, un phénomène de tourbillon ou "vortex". En effet, lorsque l'eau arrive sous pression, par la conduite d'injection 48, l'orientation tangentielle de cette dernière permet de faire subir à l'eau qui est admise dans la cuve 1 un mouvement tournant qui, si la vitesse d'injection de l'eau est suffisante, permet l'établissement d'un tourbillon qui se concentre à sa base, subit une déflexion sur le plateau déflecteur 60 et forme une colonne axiale montante, dirigée à contre-courant, et qui s'engage entre la face interne de la partie tronconique 40 et l'électrode 3 pour être expulsée, par la conduite de sortie 44 à l'extérieure de la cuve 1.

Bien entendu dans le but, notamment, de favoriser au démarrage la formation du tourbillon et l'établissement de la colonne montante axiale de l'eau traitée, on pourra faire appel à plusieurs conduites d'injection 48 afin de faire se conjuguer les efforts tangentiels appliqués à l'eau à traiter.

Suivant l'invention, la cuve 1 est réalisée en un métal tel que du fer dont le potentiel redox constituant un potentiel de référence, est judicieusement choisi pour ne permettre que certaines réactions à son contact.

Le phénomène de tourbillon crée à l'intérieur de la cuve 1 est particulièrement intéressant pour assurer un fonctionnement pleinement efficace du dispositif suivant l'invention.

En effet, suivant l'invention, comme exposé précédemment, on réalise une réduction de l'oxygène dissous dans l'eau, à proximité de la cathode, c'est-à-dire dans le cas présent à proximité de la paroi interne de la cuve 1, de façon à générer la formation d'ions $OH^-$, qui vont réagir sur les bicarbonates présents dans l'eau, à l'état dissous, pour former des germes de carbonate de calcium insolubles. Parallèlement à cette réaction, qui peut être apparentée à une réaction de décarbonatation alcaline, telle que celle obtenue par injection de soude, la couche limite de frottement voit, au contact de la paroi de la cuve 1, sa concentration en ions $Ca^{++}$ augmenter, ce qui favorise la formation de germes de carbonate de calcium. Sous l'action du tourbillon généré dans la cuve 1, ces germes de carbonate de calcium, ainsi que les particules solides en suspension dans l'eau, son entraînés vers le bas de la cuve 1 et chassés, sous l'effet dynamique communiqué à l'eau, au travers de la section de passage annulaire 63 prévue entre la base de la cuve 1 et le déflecteur circulaire 60, dans la chambre collectrice 54, de sorte que l'eau ainsi clarifiée remonte par le tourbillon généré par le plateau déflecteur 60 et est évacuée, comme mentionné précédemment par la conduite de sortie 44.

Les particules reçues dans la chambre collectrice 54 s'épaississent progressivement, sous forme de boues, puis sont évacuées par le tube 56 lorsque l'on ouvre une vanne, ou une électrovanne, non représentée sur le dessin.

Le présent mode de mise en oeuvre de l'invention permet ainsi d'assurer une régénération quasi permanente de la cathode, ce qui permet à l'appareil suivant l'invention de fonctionner de façon continue avec une efficacité optimale.

D'autre part on sait que, dans une cellule d'électrolyse du type de celle mise en oeuvre dans l'invention, il est difficile d'utiliser des anodes solubles puisque l'oxydation qui se produit à l'anode génère des colloïdes métalliques qui se combinent avec les particules en suspension dans l'eau pour former des complexes qui, au fur et à mesure de leur formation, perturbent la réaction se produisant à l'anode.

Le présent mode de mise en oeuvre de l'invention permet l'utilisation d'anodes solubles, puisque le tourbillon créé dans la cuve 1 permet d'assurer l'élimination des complexes qui sont évacués dans la chambre collectrice 54.

L'utilisation d'une anode soluble dans un appareil suivant l'invention à effet tourbillon ou "vortex" est particulièrement intéressante lorsque ledit appareil est mis en oeuvre dans un réseau bouclé du type représenté sur la figure 5.

Dans ce mode de mise en oeuvre particulier, qui ne représente qu'un exemple des multiples applications que l'on peut mettre en oeuvre en réseau bouclé, l'appareil suivant le présent mode de mise en oeuvre de l'invention est utilisé pour assurer la purification de l'eau d'un bassin 70. Dans ce but l'eau est prélevée dans le bassin 70 par une canalisation 71 et une pompe 72 qui injecte celle-ci, par la conduite d'arrivée d'eau 48, dans la cuve 1, avec une pression suffisante pour, comme décrit précédemment, créer dans celle-ci un effet tourbillon ou "vortex", qui se concentre à sa base, subit une déflexion sur le plateau réflecteur et forme une colonne axiale montante d'eau purifiée qui sort de la cuve 1 pour retourner, par une canalisation 76, au bassin 70. Le courant d'eau purifié entraîne, au passage, les ions métalliques formés à l'anode, du fait que celle-ci est une anode soluble, et ces ions sont emmenés dans les canalisations 76 et 71 ou ils réagissent avec les sels minéraux de l'eau pour former des colloïdes qui en se déposant sur la surface interne des canalisations 76 et 71 assurent leur protection anti-corrosion. L'excès de ceux-ci retourne à l'appareil lors d'un cycle suivant, et ces colloïdes sont évacués, par l'effet tourbillon, dans la chambre collectrice 51 d'où ils sont ensuite évacués sous forme de boues. L'appareil permet ainsi de n'avoir sur les canalisations que la quantité de colloïdes nécessaire à leur protection anti-corrosion puisque le surplus est évacué par l'appareil, ce qui évite leur accumulation dans les canalisations, comme cela se produit habituellement avec les appareils de la technique antérieure.

En choisissant la nature de l'anode soluble de façon appropriée, on peut également réaliser un traitement chimique de l'eau en circulation dans un réseau bouclé. Ainsi, en utilisant une anode en argent, on assure une oxydation des matières organiques contenues dans le réseau 70, ce qui confère au dispositif suivant l'invention une fonction bactéricide. De même en choisissant une électrode en cuivre ou confère au dispositif suivant l'invention des propriétés algicides.

Bien que dans la description qui précède, il ait été indiqué que le procédé et l'appareil suivant l'invention s'appliquaient plus particulièrement à la décarbonatation de l'eau, ils peuvent bien entendu être également utilisés à d'autres fins, notamment au traitement d'eau agressive, à forte teneur en oxygène dissous, afin d'abaisser le taux d'oxygène dissous et de réduire ainsi la corrosion.

**Revendications**

1. Procédé de traitement de l'eau par électrolyse, notamment en vue de sa décarbonatation, dans lequel on fait passer un courant électrique dans l'eau, par conduction ionique, entre une anode (3) et une cathode (1) reliées respectivement aux pôles positif (2+) et négatif (2-) d'un dispositif de commande électrique (B), caractérisé en ce qu'on choisit, pour la cathode (1) un métal dont le potentiel redox, constituant un potentiel de référence restant sensiblement constant par rapport à l'eau, pendant l'électrolyse, est supérieur au seuil de réduction effective de l'eau, de manière à éviter la réduction de cette eau, et on produit, pendant l'électrolyse, les ions $OH^-$ nécessaires pour la germination du carbonate de calcium uniquement à partir de l'oxygène dissous dans l'eau.

2. Procédé suivant la revendication 1 caractérisé en ce qu'on isole la cathode (1) à l'égard de toute liaison avec la terre.

3. Procédé suivant l'une des revendications précédentes caractérisé en ce qu'on dissout l'oxygène par aération préalable de l'eau.

4. Procédé suivant l'une des revendications précédentes caractérisé en ce qu'on introduit l'oxygène dans l'eau pendant son électrolyse.

5. Procédé suivant l'une quelconque des revendications précédentes caractérisé en ce qu'on maintient l'anode, pendant l'électrolyse, à un potentiel (U) inférieur ou égal à la valeur du blocage cinétique de l'eau à l'oxydation et de préférence inférieur au seuil d'oxydation de l'eau.

6. Procédé suivant la revendication 5 caractérisé en ce qu'on porte périodiquement, pendant une très courte période de temps, le potentiel de l'anode à une valeur supérieure au seuil d'oxydation de l'eau, en appliquant un train d'impulsions électriques périodiques (i) à l'anode (3).

7. Procédé suivant la revendication 6 caractérisé en ce que la susdite valeur supérieure est obtenue par superposition du susdit train d'impulsions électriques au susdit potentiel (U) appliqué à l'anode.

8. Procédé suivant les revendications 6 et 7 caractérisé en ce qu'on applique à l'anode des impulsions périodiques (i) ayant un flanc de montée à pente faible, de forme hyperbolique de préférence, et à flanc de descente vertical ou à forte pente.

9. Procédé suivant la revendication 1 ou 2 caractérisé en ce qu'on soumet l'eau en cours de traitement à un mouvement tourbillonnaire apte à éloigner les éléments formés à proximité d'au moins une électrode, au loin de celle-ci.

10. Procédé suivant la revendication 9 caractérisé en ce que le mouvement tourbillonnaire constitue un tourbillon ou "vortex".

11. Procédé suivant la revendication 10 caractérisé en ce que la partie externe du tourbillon ou "vortex" vient en contact au cours de son mouvement avec la cathode (1).

12. Appareil de traitement de l'eau par électrolyse, en vue de sa décarbonation, comportant une cellule électrolytique (A) et un dispositif de commande électrique (B), la cellule électrolytique (A) comprenant une cuve (1) à laquelle sont reliées une conduite (5,48) d'arrivée de l'eau à traiter et une conduite (7,44) de départ de l'eau traitée et dans laquelle est engagée au moins une anode (3), caractérisé en ce que la cathode de la cellule électrolytique (A) est constituée de la cuve (1) et est prise comme électrode de référence, cette cuve (1) étant réalisée en un métal dont le potentiel redox est supérieur au seuil de réduction de l'eau.

13. Appareil suivant la revendication 11 caractérisé en ce que la cuve (1) est isolée de la terre.

14. Appareil suivant la revendication 13 caractérisé en ce que l'anode (3) pénètre dans la cuve (1) en étant isolée électriquement par un manchon isolant (4,38).

15. Appareil suivant l'une quelconque des revendications 13 à 14 caractérisé en ce que les canalisations (5,) d'arrivée de l'eau à traiter et de départ (7) de l'eau traitée débouchent à l'intérieur de la cuve (1) en étant isolées électriquement de la paroi de cette cuve par des manchons isolants (6,8) et la continuité électrique entre ces canalisations (5,7) est assurée par un conducteur (9) ne touchant pas la cuve (1).

16. Appareil suivant la revendication 12 caractérisé en ce que la cuve (1) comporte des moyens aptes à créer, à l'intérieur de celle-ci, un tourbillon ou "vortex", dont les périphéries externe et interne viennent respectivement en contact avec les parois de la cuve (1), constituant la cathode, et avec l'anode (3).

17. Appareil suivant la revendication 16 caractérisé en ce que la cuve (1) est constituée d'un tube cylindrique d'axe longitudinal et vertical (yy'), fermé à son extrémité supérieure, cette dernière étant pourvue de moyens d'injection (48) de l'eau à traiter orientés tangentiellement par rapport à la paroi interne de la cuve (1), de manière à créer dans celle-ci ledit tourbillon, ladite cuve (1) comportant, à sa base, un canal annulaire (63) destiné à assurer l'évacuation des particules contenues dans le fluide à traiter, et une chambre collectrice (54), propre à recueillir ces dernières, l'extrémité inférieure de la cuve (1) comportant, au centre du passage annulaire (63), des moyens déflecteurs (60) permettant la formation d'une colonne axiale de fluide traité, des moyens de sortie axiaux (36) étant prévus à la partie supérieure de la cuve (1) pour assurer l'évacuation de la colonne axiale de fluide traité hors de la cuve (1).

18. Appareil suivant la revendication 17 caractérisé en ce que l'anode (3) est en forme de barreau cylindrique, disposé suivant l'axe (yy') de la cuve (1), les moyens de sortie axiaux étant constitués d'un tube (36) entourant l'anode (3) et reliés à la conduite de sortie de l'eau (44).

19. Appareil suivant l'une quelconque des revendications 16 à 18 caractérisé en ce que l'anode (3) est une anode soluble.

20. Appareil suivant l'une quelconque des revendications 12 à 19 caractérisé en ce qu'il est disposé dans un "réseau bouclé", c'est-à-dire que son entrée (5,48) et sa sortie (7,44) sont en communication avec une même source d'eau (70).

21. Appareil suivant l'une quelconque des revendications 12 à 20 caractérisé en ce que le dispositif de commande électrique (b) comprend un générateur d'impulsions périodiques (14) dont la sortie est reliée à l'anode (3) de la cellule électrolytique (A), et des moyens (18,19) de mesure et d'intégration de l'intensité du courant électrique dans la cellule électrolytique (A), ces moyens étant connectés au générateur d'impulsions (14) de manière à asservir le fonctionnement de ce générateur à la mesure de l'intensité du courant.

22. Appareil suivant la revendication 21 caractérisé en ce que le générateur d'impulsions (14) est prévu de manière à produire des impulsions (i) dont le flanc de montée a une pente faible et le flanc de descente est vertical ou a une forte pente.

23. Appareil suivant l'une quelconque des revendications 12 à 22 caractérisé en ce que le dispositif de commande électrique (B) comprend un circuit (22) de mesure et de régulation de la tension de sortie (U) entre les deux bornes de sortie (2+,2-) du dispositif de commande, c'est-à-dire de la différence de potentiel moyenne entre l'anode (3) et la cathode (1), et un potentiomètre (27) qui est connecté au circuit (22) de mesure et de régulation de cette différence de potentiel moyenne (U), pour permettre de régler cette différence.

24. Appareil suivant l'une quelconque des revendications 12 à 23 caractérisé en ce qu'au moins un contacteur de débit d'eau (17) respectivement ouvert et fermé en l'absence et en présence d'un débit d'eau, est branché entre le secteur d'alimentation électrique (15) et les circuits (14,22) du dispositif de commande électrique (B).

**Patentansprüche**

1. Verfahren zur Elektrolysebehandlung von Wasser, insbesondere zur Entkarbonatisierung, bei dem man mittels Ionenleitung im Wasser einen elektrischen Strom zwischen einer Anode (3) und einer Kathode (1) fließen läßt, die mit dem positiven (2+) bzw. negativen (2-) Pol eines elektrischen Steuergerätes verbunden sind, **dadurch gekennzeichnet, daß** für die Kathode (1) ein Metall gewählt wird, dessen Redoxpotential, das ein während der Elektrolyse bezüglich des Wassers im wesentlichen konstantes Referenzpotential darstellt, höher liegt als die effektive Reduktionschwelle des Wassers, so daß die Reduktion dieses Wassers vermieden wird, und daß während der Elektrolyse die zur Keimbildung des Calciumcarbonat nötigen OH-Ionen ausschließlich ausgehend von dem im wasser gelösten Sauerstoff erzeugt werden.

2. Verfahren nach Anspruch 1, **dadurch gekennzeichnet**, daß die Kathode (1) gegen jeglichen Kontakt mit der Erde isoliert ist.

3. Verfahren nach einem der vorhergehenden Ansprüche, **dadurch gekennzeichnet**, daß der Sauerstoff durch zuvor stattfindende Lüftung des Wassers gelöst wird.

4. Verfahren nach einem der vorhergehenden Ansprüche, **dadurch gekennzeichnet**, daß der Sauerstoff während der Elektrolyse ins Wasser gebracht wird.

5. Verfahren nach einem der vorhergehenden Ansprüche, **dadurch gekennzeichnet**, daß die Anode während der Elektrolyse auf einem Potential (U) gehalten wird, das niedriger oder gleich dem Wert der kinetischen Hemmung der Wasseroxidation ist, und das vorzugsweise unter der Oxidationsschwelle des Wassers liegt.

6. Verfahren nach Anspruch 5, **dadurch gekennzeichnet**, daß während eines sehr kurzen Zeitraums das Potential der Anode periodisch auf einen Wert gebracht wird, der größer als die Oxidationsschwelle des Wassers ist, indem eine Folge von periodischen elektrischen Impulsen (i) an die Anode (3) angelegt wird.

7. Verfahren nach Anspruch 6, **dadurch gekennzeichnet**, daß dieser größere Wert durch Überlagerung des an die Anode angelegten Potentials (U) mit der Impulsfolge erzielt wird.

8. Verfahren nach einem der Ansprüche 6 und 7, **dadurch gekennzeichnet**, daß an die Anode periodische Impulse (i) angelegt werden, die eine Anstiegsflanke geringer Steigung mit vorzugsweise hyperbolischer Form, und eine senkrechte oder stark geneigte Abfallsflanke haben.

9. Verfahren nach Anspruch 1 oder 2, **dadurch gekennzeichnet**, daß das Wasser im Verlauf der Behandlung einer solchen wirbelförmigen Bewegung unterworfen wird, daß die in der Nähe mindestens einer Elektrode gebildeten Elemente von dieser entfernt werden.

10. Verfahren nach Anspruch 9, **dadurch gekennzeichnet**, daß die wirbelförmige Bewegung einen Wirbel oder "Vortex" bildet.

11. Verfahren nach Anspruch 10, **dadurch gekenn-**

**zeichnet**, daß der äußere Bereich des Wirbels oder "Vortex" im Verlauf seiner Bewegung mit der Kathode (1) in Kontakt kommt.

12. Vorrichtung zur Elektrolysebehandlung von Wasser zur Entkarbonatisierung mit einer elektrolytischen Zelle (A) und einem elektrischen Steuergerät (B), wobei die elektrolytische Zelle (A) einen Behälter (1) aufweist, mit dem eine Zuführleitung (5,48) für das zu behandelnde Wasser und eine Abflußleitung (7,44) für das behandelte Wasser verbunden sind und in den mindestens eine Anode (3) eingesetzt ist, **dadurch gekennzeichnet**, daß die Kathode der elektrolytischen Zelle (A) vom Behälter (1) gebildet und als Referenzelelektrode verwendet wird, und daß dieser Behälter (1) aus einem Metall besteht, dessen Redoxpotential über der Reduktionsschwelle des Wassers liegt.

13. Vorrichtung nach Anspruch 11, **dadurch gekennzeichnet**, daß der Behälter (1) gegen Erde isoliert ist.

14. Vorrichtung nach Anspruch 13, **dadurch gekennzeichnet,** daß die Anode (3) in den Behälter (1) hineinragt und durch eine Isoliermuffe (4,38) elektrisch isoliert ist.

15. Vorrichtung nach einem der Ansprüche 13 bis 14, **dadurch gekennzeichnet**, daß die Zuführungsrohranschlüsse (5) für das zu behandelnde Wasser und die Abflußrohranschlüsse (7) des behandelten Wassers im Inneren des Behälters (1) enden, und von der Wandung dieses Behälters durch Isoliermuffen (6,8) elektrisch isoliert sind, und daß die elektrische Verbindung zwischen diesen Rohranschlüssen (5,7) durch cinon Leiter (9) gebildet wird, der den Behälter (1) nicht berührt.

16. Vorrichtung nach Anspruch 12, **dadurch gekennzeichnet**, daß der Behälter (1) Einrichtungen aufweist, die im Inneren dieses Behälters einen Wirbel oder "Vortex" erzeugen, dessen äußere bzw. innere Randbereiche in Kontakt mit den Wänden des die Kathode bildenden Behälters (1) bzw. mit der Anode (3) kommen.

17. Vorrichtung nach Anspruch 16, **dadurch gekennzeichnet**, daß der Behälter (1) aus einem mit senkrechter Längsachse (yy') angeordneten zylindrischen Rohr mit verschlossenem oberen Ende besteht, an dem Einspritzeinrichtungen (48) für das zu behandelnde Wasser vorgesehen sind, welche zur Erzeugung eines Wirbels im Behälter tangential zu dessen Innenwand (1) ausgerichtet sind, daß der Behälter (1) an seiner Basis einen Ringkanal (63) zur Abführung der im zu behandelnden Fluid enthaltenen Partikel und eine Sammelkammer (54) zum Auffangen der Partikel aufweist und daß am unteren Ende des Behälters (1) in der Mitte des Ringkanals (63) Ablenkteile (60) zur Bildung einer axialen Säule aus behandeltem Fluid und am oberen Teil des Behälters (1) axiale Abführeinrichtungen (36) zum Abführen der axialen Säule aus behandeltem Fluid aus dem Behälter (1) vorgesehen sind.

18. Vorrichtung nach Anspruch 17, **dadurch gekennzeichnet**, daß die Anode (3) die Form eines zylindrischen Stabs hat, der längs der Achse (yy') des Behälters (1) angeordnet ist, und daß die axialen Abführeinrichtungen aus einem Rohr (36) bestehen, welches die Anode (3) umgibt und mit der wasserabflußleitung (44) verbunden ist.

19. Vorrichtung nach einem der Ansprüche 16 bis 18, **dadurch gekennzeichnet**, daß die Anode (3) auflösbar ist.

20. Vorrichtung nach einem der Ansprüche 12 bis 19, **dadurch gekennzeichnet**, daß sie in einem Ringleitungsnetz angeordnet ist, d.h. daß ihre Zuleitung (5,48) und ihr Abfluß (7,44) in Verbindung mit derselben Wasserversorgung (70) stehen.

21. Vorrichtung nach einem der Ansprüche 12 bis 20, **dadurch gekennzeichnet**, daß das elektrische Steuergerät (B) einen Generator für periodische Impulse (14), dessen Ausgang mit der Anode (3) der elektrolytischen Zelle (A) verbunden ist, und Meß- und Integrationseinrichtungen (18,19) für die Stärke in der elektrolytischen Zelle (A) fließenden elektrischen Strom aufweist, die mit dem Impulsgenerator (14) derart verbunden sind, daß sie den Betrieb dieses Generators abhängig von der Stromstärke steuern.

22. Vorrichtung nach Anspruch 21, **dadurch gekennzeichnet**, daß der Impulsgenerator (14) Impulse (i) mit Anstiegsflanken geringer Steigung und senkrechten oder steilen Abfallsflanken erzeugt.

23. Vorrichtung nach einem der Anspruche 12 bis 22, **dadurch gekennzeichnet**, daß das elektrische Steuergerät (B) eine Meß- und Regelschaltung (22) fur die Ausgangsspannung (U) zwischen seinen beiden Ausgangsanschlußklemmen (2+,2-), d.h. für die mittlere Potentialdifferenz zwischen der Anode (3) und der Kathode (1), und ein mit der Meß- und Regelschaltung (22) verbundenes Potentiometer (27) zur Regelung dieser Differenz aufweist.

24. Vorrichtung nach einem der Ansprüche 12 bis 23, **dadurch gekennzeichnet**, daß zwischen die Stromversorgungsquelle (15) und die Schaltung (14,22) des elektrischen Steuergerätes (B) mindestens ein bei Wasserdurchsatz geschlossener und ohne Wasserdurchsatz geöffneter Kontaktgeber (17) geschaltet ist.

## Claims

1. Process for treating water by electrolysis, particularly with a view to decarbonation thereof, in which an electric current is passed in the water, by ionic conduction, between an anode (3) and a cathode (1) respectively connected to the positive (2+) and negative (2-) poles of an electrical control device (B), characterized in that, for the cathode (1), a metal is chosen whose redox potential, constituting a reference potential remaining substantially constant with respect to water, during electrolysis, is greater than the threshold of effective reduction of the water, so as to avoid the reduction of this water, and there are produced, during electrolysis, the $OH^-$ ions necessary for germination of the calcium carbonate solely from the oxygen dissolved in the water.

2. Process according to Claim 1, characterized in that the cathode (1) is insulated with respect to any link with the earth.

3. Process according to either one of the preceding Claims, characterized in that the oxygen is dissolved by prior aeration of the water.

4. Process according to any of the preceding Claims, characterized in that the oxygen is introduced in the water during electrolysis thereof.

5. Process according to any one of the preceding Claims, characterized in that the anode is maintained, during electrolysis, at a potential (U) less than or equal to the value of the kinetic blockage of water to oxidation and preferably less than the threshold of oxidation of water.

6. Process according to Claim 5, characterized in that the potential of the anode is periodically taken, for a very short period of time, to a value higher than the threshold of oxidation of the water, applying a train of periodic electrical pulses (i) to the anode (3).

7. Process according to Claim 6, characterized in that said higher value is obtained by superposition of said train of electrical pulses to said potential (U) applied to the anode.

8. Process according to Claims 6 and 7, characterized in that there are applied to the anode periodic pulses (i) having a leading edge of slight inclination, preferably of hyperbolic form, and having a trailing edge which is vertical or with considerable inclination.

9. Process according to Claim 1 or 2, characterized in that the water is subjected, during treatment, to an eddying movement adapted to move the elements formed in the vicinity of at least one electrode, far from the latter.

10. Process according to Claim 9, characterized in that the eddying movement constitutes an eddy or "vortex".

11. Process according to Claim 10, characterized in that the outer part of the eddy or "vortex" comes into contact during its movement with the cathode (1).

12. Apparatus for treating water by electrolysis, with a view to decarbonation thereof, comprising an electrolytic cell (A) and an electrical control device (B), the electrolytic cell (A) comprising a tank (1) to which are connected a conduit (5, 48) for admission of water to be treated and a conduit (7, 44) for evacuation of the treated water and in which is engaged at least one anode (3), characterized in that the cathode of the electrolytic cell (A) is constituted by the tank (1) and is taken as reference electrode, this tank (1) being made of a metal whose redox potential is greater than the threshold of reduction of the water.

13. Apparatus according to Claim 11, characterized in that the tank (1) is insulated from earth.

14. Apparatus according to Claim 13, characterized in that the anode (3) penetrates in the tank (1), being electrically insulated by an insulating sleeve (4, 38).

15. Apparatus according to either one of Claims 13 to 14, characterized in that the conduits (5) for admission of water to be treated and (7) for evacuation of the treated water open out inside the tank (1), being electrically insulated from the wall of this tank by insulating sleeves (6, 8) and the electrical continuity between these conduits (5, 7) is ensured by a conductor (9) not touching the tank (1).

16. Apparatus according to Claim 12, characterized in that the tank (1) comprises means adapted to create, thereinside, an eddy or "vortex", of which the outer and inner peripheries come respectively into contact with the walls of the tank (1), constituting the cathode, and with the anode (3).

17. Apparatus according to Claim 16, characterized in that the tank (1) is constituted by a cylindrical tube of longitudinal and vertical axis (yy'), closed at its upper end, this latter being provided with means (48) for injecting the water to be treated, oriented tangentially with respect to the inner wall of the tank (1) so as to create said eddy therein, said tank (1) comprising, at its base, an annular channel (63) intended to ensure evacuation of the particles contained in the fluid to be treated, and a collecting chamber (54), adapted to collect said particles, the lower end of the tank (1) comprising, at the centre of the annular passage (63), deflector means (60) allowing the formation of an axial column of treated fluid, axial outlet means (36) being provided in the upper part of the tank (1) to ensure evacuation of the axial column of treated fluid out of the tank (1).

18. Apparatus according to Claim 17, characterized in that the anode (3) is in the form of a cylindrical bar, disposed along axis (yy') of the tank (1), the axial outlet means being constituted by a tube (36) surrounding the anode (3) and connected to the water outlet conduit (44).

19. Apparatus according to any one of Claims 16 to 18, characterized in that the anode (3) is a soluble anode.

20. Apparatus according to any one of Claims 12 to 19, characterized in that it is disposed in a "looped network", i.e. its inlet (5, 48) and its outlet (7, 44) are in communication with the same source of water (70).

21. Apparatus according to any one of Claims 12 to 20, characterized in that the electrical control device (b) comprises a periodic pulse generator (14) whose output is connected to the anode (3) of the electrolytic cell (A), and means (18, 19) for measuring and integrating the intensity of the electric current in the electrolytic cell (A), these means being connected to the pulse generator (14) so as to servo-control the functioning of this generator by the measurement of the intensity of the current.

22. Apparatus according to Claim 21, characterized in that the pulse generator (14) is provided so as to produce pulses (i) of which the leading edge has a slight inclination and whose trailing edge is vertical or has a considerable inclination.

23. Apparatus according to any one of Claims 12 to 22, characterized in that the electrical control device (B) comprises a circuit (22) for measuring and regulating the output voltage (U) between the two output terminals (2+, 2-) of the control device, i.e. the mean difference in potential between the anode (3) and the cathode (1), and a potentiometer (27) which is connected to the circuit (22) for measuring and regulating this mean difference in potential (U), to enable this difference to be adjusted.

24. Apparatus according to any one of Claims 12 to 23, characterized in that at least one water flow contactor (17) respectively open and closed in the absence and in the presence of a flow of water, is connected between the electrical supply mains (15) and the circuits (14, 22) of the electrical control device (B).

FIG. 1

FIG. 2

FIG.3

FIG.4

FIG.5